# DEMANDE DE BREVET EUROPEEN

(11) **EP 2 750 306 A1**
(43) Date de publication de la demande: **02.07.2014**
(21) Numéro de dépôt: 12306673.0
(22) Date de dépôt: 26.12.2012
(51) Int. Cl.: H04B 10/071, H04B 10/079, H04J 14/02

(54) **Procédé de diagnostique de la dégradation d'une liaison optique**

(71) Demandeur: Alcatel Lucent, 75007 Paris (FR)
(72) Inventeur: Petton, Pierre-Yves, 91620 Nozay (FR)
(74) Mandataire: Sciaux, Edmond

(57) **Abrégé**

Ce procédé de diagnostique concerne une dégradation des performances d'un réseau de télécommunication (20) comportant des noeuds (21-25) et des liaisons optiques (26-29). Le procédé de diagnostique comporte les étapes suivantes :
- on détecte une diminution de la puissance d'un canal optique (26) à l'entrée de son noeud de réception (21),
- on vérifie que la diminution de puissance d'entrée observée n'est pas due à une diminution de la puissance dudit canal optique (26) en sortie de son noeud d'émission (25),
- on localise la section dégradée de la liaison optique en comparant le bilan de puissance dudit canal optique (26) avec le bilan de puissance d'autres canaux optique (27-29) avec qui il partage certaines sections S1-S4 de la liaison optique, et en utilisant les données relatives à la topologie du réseau de télécommunication,
- on mesure le taux d'erreur binaire BER pour évaluer l'urgence de l'intervention,
- on décide des actions correctives à mener.

## Description

La présente invention se rapporte au domaine des réseaux de télécommunication par liaison optique, et en particulier à une dégradation des performances pouvant survenir dans une liaison optique sous l'effet d'évènement extérieur qui peut aller jusqu'à entrainer une interruption du trafic.

Les câbles contenant les fibres optiques des réseaux de télécommunication terrestre peuvent être endommagés, notamment au cours de travaux de génie civil, effectués sans précaution au moyen d'engins de chantier par exemple, ou d'incidents d'origine naturelle affectant leur environnement proche (éboulement, glissement de terrain,...).

Les conséquences peuvent être soit une rupture de la continuité de la liaison qui stoppe totalement le trafic, soit un dommage plus ou moins important causé à la fibre optique pouvant avoir des répercutions sur la qualité de la transmission et entrainer éventuellement une rupture de la fibre optique à plus ou moins brève échéance.

Les exploitants de ces réseaux ont donc besoin de pouvoir identifier rapidement quelle est la nature du dommage subie par la fibre optique, de localiser l'endroit du réseau où s'est produit l'incident et de déterminer les actions correctives à mener. Or ces opérations nécessitent du temps et requièrent une connaissance poussée de la topologie du réseau de télécommunication de la part de l'opérateur. En outre elles peuvent nécessiter la possession et la mise en oeuvre d'équipements. Les conséquences d'une telle situation sont donc extrêmement coûteuses en temps, en équipement et en expertise.

L'invention a pour but de proposer un procédé de diagnostique, permettant de détecter une dégradation survenue dans une liaison optique, de la localiser et de déterminer les conditions nécessaire à la restauration des performances requises, dont les étapes s'effectuent de manière intégrée dans un temps réduit et pour un coût moindre.

L'objet de la présente invention est un procédé de diagnostique d'une dégradation des performances d'un réseau de télécommunication comportant des noeuds et des liaisons optiques, comprenant les étapes suivantes :
- on détecte une diminution de la puissance d'un canal optique à l'entrée de son noeud de réception,
- on vérifie que la diminution de puissance d'entrée observée n'est pas due à une diminution de la puissance dudit canal optique en sortie de son noeud d'émission,
- on localise la section dégradée de la liaison optique en comparant le bilan de puissance dudit canal optique avec le bilan de puissance d'autres canaux optiques avec lesquels il partage certaines sections de la liaison optique, et en utilisant les données relatives à la topologie du réseau de télécommunication,
- on mesure le taux d'erreur binaire pour évaluer l'urgence de l'intervention,
- on décide des actions correctives à mener.

On entend par procédé de diagnostique, un procédé comprenant les mesures et contrôles permettant d'identifier l'existence d'un problème, localiser l'endroit où se situe le problème et déterminer les actions correctives à mettre en oeuvre pour résoudre ce problème. On entend par bilan de puissance d'un canal optique, la différence entre la puissance de ce canal optique à la sortie d'un noeud d'émission et sa puissance à l'entrée d'un noeud de réception.

Selon un premier aspect, les étapes du procédé sont réalisées de manière automatisées et intégrées en s'appuyant sur le système de gestion du réseau de télécommunication.

On entend par étape automatisée une étape réalisée sans intervention humaine. On entend par étapes intégrées des étapes réalisées en se basant sur les informations recueillies à l'étape précédente.

Selon un premier mode de réalisation, la dégradation de la liaison optique est localisée en identifiant les sections partagées par des canaux optiques dont le bilan de puissance est dégradé.

Selon un deuxième mode de réalisation, la dégradation de la liaison optique est localisée en identifiant au moins une section traversée par le seul canal optique dégradé.

Selon une forme particulière d'exécution, on détermine la nature et la localisation de la dégradation de la liaison optique au moyen d'un réflectomètre optique temporel.

Toutes les étapes du procédé de diagnostique sont intégrées. La localisation de la partie défectueuse est rendue plus facile grâce à un outil logiciel s'appuyant sur les informations de topologie du réseau télécom. L'outil logiciel assure la détection d'un canal optique dégradé. Il liste les sections de la liaison optique traversées par ce canal optique, et les autres canaux optiques présents dans ces sections. Enfin il établit une corrélation entre la dégradation d'un ou plusieurs canaux optiques et les sections listées. Les étapes automatisées et intégrées du procédé de diagnostique peuvent être prises en charge par le système de gestion du réseau de télécommunication.

Selon un deuxième aspect, le procédé comporte la mesure du taux d'erreur binaire afin de déterminer l'urgence de l'intervention.

Selon un troisième aspect, le procédé comprend en outre une étape de décision d'une intervention sur le site.

Ce procédé de diagnostique a notamment comme avantage une réduction du coût de maintenance d'un réseau de télécommunication à liaison optique, notamment en évitant à l'opérateur d'employer un expert en réseau optique.

L'invention a aussi pour objet un système de diagnostique associé au système de gestion du réseau de transport, qui est utilisé pour la mise en oeuvre du procédé de diagnostique qui vient d'être décrit, comprenant un outil logiciel.

D'autres caractéristiques et avantages de la présente invention apparaîtront à la lecture de la description suivante et des exemples d'application, donnés bien entendu à titre illustratif et non limitatif, et dans le dessin annexé sur lequel
- la figure 1 illustre les étapes du procédé de diagnostique.
- la figure 2 illustre une portion d'un réseau de télécommunication à liaison optique,
- la figure 3 illustre un réseau optique en anneau,
- la figure 4 illustre un réseau optique passif et son infrastructure de liaison optique,
- les figures 5a, 5b et 5c illustrent l'identification du type de dégradation survenue dans la liaison optique par l'examen du profil de courbes de la puissance optique réfléchie P mesurée en fonction de la longueur L de fibre traversée.

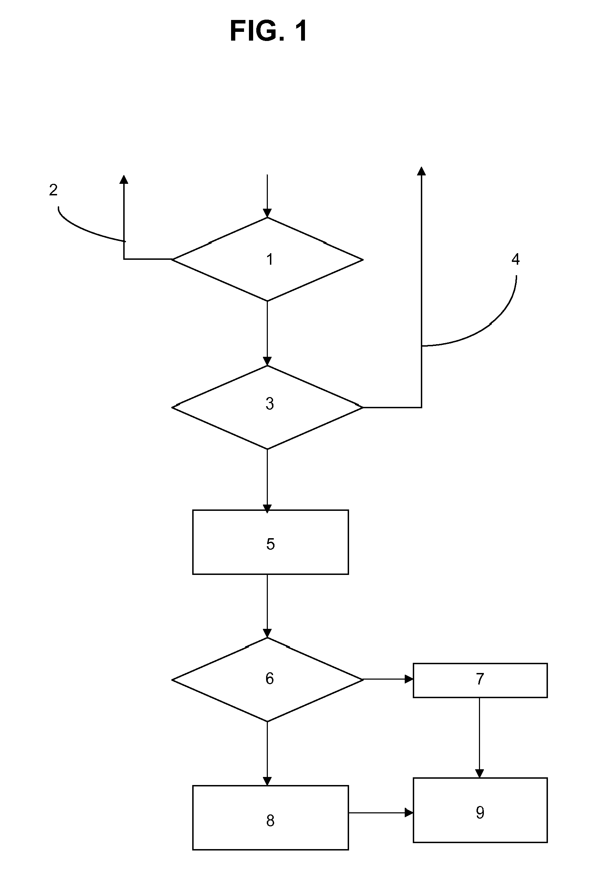

Les étapes du procédé de diagnostique d'une dégradation dans une liaison optique appartenant à un réseau de télécommunication sont illustrées sur la figure 1. Au cours d'une première étape **1,** on mesure la puissance d'un canal optique à l'entrée d'un noeud du réseau. On entend par canal optique, un signal optique qui ne comprend qu'une seule longueur d'onde. Soit on n'observe aucune variation de la puissance du canal optique à l'entrée du noeud et le procédé s'interrompt (chemin **2).** Soit on observe une dégradation de la puissance du canal optique à l'entrée du noeud. Toutefois une dégradation de la liaison optique ne signifie pas forcément une rupture de la fibre optique. Dans le cas d'une simple dégradation, on observe une augmentation modérée de l'atténuation dans la liaison optique qui n'est que de quelques décibels (dB).

Au niveau du réseau de télécommunication, une alerte provoquée par une baisse de puissance d'un canal optique à l'entrée de son noeud de réception n'est pas liée à une détérioration de la liaison optique si elle est la conséquence d'une diminution de la puissance de ce canal optique à la sortie de son noeud d'émission se trouvant en amont. La dégradation de la liaison optique doit être analysée par le système de diagnostique associé au système de gestion du réseau de transport en charge de tous les noeuds connectés. Le système de gestion du réseau de transport doit être fourni avec des informations de topologie relatives au réseau de télécommunication, par exemple telles que «le port de sortie α du noeud x est connecté au port d'entrée β du noeud y». Dans le cas d'un canal optique émis par le noeud x et reçu par le noeud y, si la puissance optique d'entrée au port β du noeud y de réception de ce canal optique se dégrade, le système de diagnostique doit vérifier la puissance optique de sortie au port α du noeud x d'émission de ce même canal optique placé en amont. Par exemple dans le cas où le noeud supporte des modules SFP (pour « Small Form Plugable » en anglais), ces mesures de puissance sont disponibles via le registre de mesure optique numérique DOM (pour « Digital Optical Monitoring » en anglais) des modules.

Bien entendu ces observations ne sont significatives que si la puissance d'un canal optique émise par le laser de son noeud d'émission n'a pas été modifiée. En effet, si la puissance optique émise par le noeud d'émission change, la puissance optique reçue par le noeud de réception est modifiée, et ce changement n'est pas lié à une dégradation de la liaison optique. Dans une deuxième étape **3,** le système de gestion du réseau de transport vérifie donc la puissance du canal optique en sortie de son noeud d'émission. Si cette puissance optique a changé dans la proportion de la dégradation de la puissance optique mesurée à l'entrée du noeud de réception, le procédé s'interrompt (chemin **4).**

Un dommage causé à la fibre optique a des répercussions sur tous les canaux optiques qui la traversent. Si la puissance d'un canal optique reçue à l'entrée d'un noeud de réception diminue, le système de diagnostique doit vérifier si la puissance de l'un des canaux optiques partageant au moins une section de la liaison optique avec le canal optique dégradé a diminué.

Dans le cas où le canal optique dégradé partage certaines sections qu'il traverse avec d'autres canaux optiques :
- soit le canal optique dégradé partage toutes les sections qu'il traverse avec d'autres canaux optiques et il existe au moins une section, parmi les sections communes, pour laquelle tous les canaux optiques qui la traversent manifestent une dégradation, la dégradation est très probablement due à un endommagement de la fibre optique et ce dégât est situé dans cette section ;
- soit le canal optique dégradé partage toutes les sections qu'il traverse avec d'autres canaux optiques et il n'existe aucune section, parmi les sections communes, pour laquelle tous les canaux optiques qui la traversent manifestent une dégradation, la dégradation n'est alors pas due à une détérioration de la liaison, mais plus probablement à une mauvaise manipulation d'une connexion sur le site.
- soit il existe au moins une section dans laquelle le canal optique présentant une dégradation est seul, et dans le cas où tous les canaux optiques avec lesquels le canal optique dégradé partage certaines autres sections ne présentent pas de dégradation, la dégradation de la liaison optique peut se trouver dans l'une des sections qui n'est pas partagée.

Le procédé qui vient d'être décrit s'applique au cas de la localisation d'une dégradation unique survenue dans le réseau de télécommunication. Ce procédé peut naturellement être étendu à tous les cas où plusieurs dégradations pouvant avoir des causes différentes surviennent simultanément.

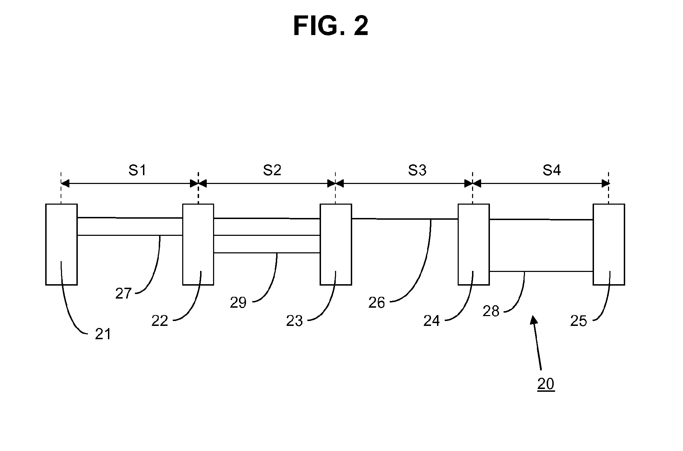

Dans une troisième étape **5,** la section de la liaison optique impactée est localisée. Des exemples de méthode de localisation de la partie de la fibre optique éventuellement endommagée sont donnés sur les figures 2 à 4.

La corrélation entre l'augmentation de l'atténuation et la dégradation de la liaison optique dont elle peut être la conséquence s'effectue à deux niveaux, soit au niveau du réseau de télécommunication impliquant les noeuds et les liaisons optiques, comprenant notamment des fibres optiques et des connecteurs, qui relient les noeuds, soit au niveau de l'intérieur d'un noeud. Il convient de noter qu'un réseau optique est conçu de manière à ménager des marges susceptibles d'absorber les fluctuations, dont le vieillissement de la liaison optique par exemple.

La conséquence de l'augmentation de l'atténuation dans la liaison optique est une diminution de la puissance du canal optique à l'entrée de son noeud de réception. Dans le cas où l'augmentation de l'atténuation dépasse la marge prévue sur le budget optique, le taux d'erreur binaire BER (pour « Binary Error Rate » en anglais) augmente. Ces conséquences peuvent être corrélées entre elles afin d'évaluer la gravité de la dégradation et l'urgence de la résolution du problème. Soit le taux d'erreur binaire BER n'augmente pas, et il n'y a pas d'urgence à régler le problème. Soit on observe une hausse du taux d'erreur binaire BER, et le problème doit être rapidement résolu.

La quatrième étape **6** consiste à mesurer le taux d'erreur binaire BER. Au niveau d'un noeud, si la puissance du canal optique à l'entrée du noeud diminue :
- soit il n'y a pas de diminution du taux d'erreur binaire BER, il n'y a alors pas d'urgence à corriger le problème car la qualité de la transmission est maintenue (étape **7),** néanmoins une opération de maintenance peut être planifiée afin de remédier au problème ;
- soit le taux d'erreur binaire BER augmente, le problème doit alors être résolu d'urgence car le système fonctionne sans marge et la qualité de transmission est dégradée (étape **8).**

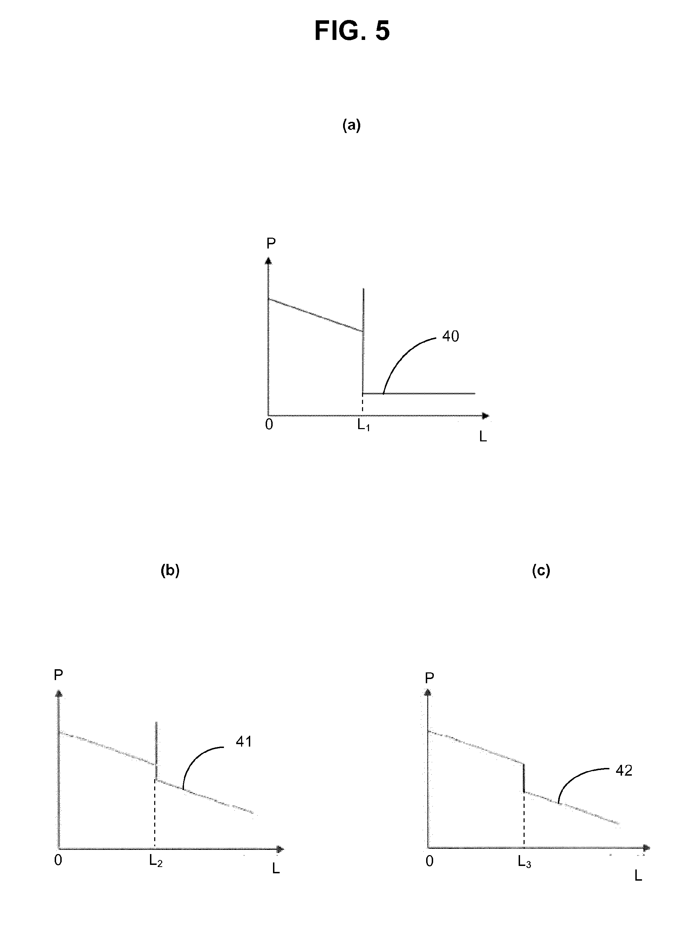

Dans une dernière étape **9,** les actions correctives à mener sont décidées et notamment une intervention sur le site peut être envisagée pour déterminer la nature de la dégradation subie par le réseau de télécommunication (voir figures 5a-5c) et l'état des connexions.

Une portion **20** d'un réseau de télécommunication à liaison optique est illustrée sur la figure 2, Des noeuds **21, 22, 23, 24, 25** sont reliés par les canaux optiques **26, 27, 28, 29** transportés dans une fibre optique. Cette figure illustre le procédé permettant la détection d'une dégradation éventuelle de l'un des canaux optiques **26, 27, 28, ou 29** et sa localisation dans l'une des sections **S1, S2, S3,** et **S4** de la liaison optique.

Dans un premier exemple, un premier canal optique **26** est émis par un noeud d'émission **25** et reçu par un noeud de réception **21.** après avoir traversé les noeuds intermédiaires **24, 23** et **22.** Un deuxième canal optique **27** est émis par un noeud d'émission **23** et reçu par le noeud de réception **21.** après avoir traversé le noeud intermédiaire **22.** Le système de diagnostique détecte une dégradation dans le bilan de puissance du premier canal optique **26** et du deuxième canal optique **27.** Toutefois aucune dégradation n'est observée dans le quatrième canal optique **29** qui partage la section **S2** avec les premier **26** et deuxième **27** canaux optiques. On n'observe pas non plus de dégradation du troisième canal optique **28** qui partage la section **S4** avec le premier canal optique **26.** La dégradation se situe donc dans la partie du réseau optique où seuls les premier **26** et deuxième **27** canaux optiques sont présents, c'est-à-dire la section **S1** de la liaison optique, et les sections **S2** et **S4** ne sont pas touchées.

Dans un deuxième exemple, le système de diagnostique détecte une dégradation dans le bilan de puissance du premier canal optique **26.** Toutefois aucune dégradation dans les deuxième **27,** troisième **28** ou quatrième **29** canaux optiques n'est observée. La dégradation se situe donc dans la partie du réseau optique où le premier canal optique **26** est seul présent, c'est-à-dire la section **S3** de la liaison optique.

Dans un troisième exemple, le système de diagnostique détecte une dégradation dans le bilan de puissance du deuxième canal optique **27.** Toutefois aucune dégradation dans les premier **26** ou quatrième **29** canaux optiques n'est observée. Dans ce cas il n'y a pas de dégradation de la liaison optique dans les sections **S1, S2, S3** et **S4,** sinon le premier canal optique **26** qui traverse les quatre sections serait lui aussi obligatoirement dégradé. Il faut donc en conclure que la dégradation observée est due à une autre cause qui peut être une connexion incorrecte sur le site.

Ce type de corrélation entre les mesures repose sur des informations précises relatives à la topologie au niveau du réseau de télécommunication. Le système de gestion du réseau de transport doit donc être informé de tout changement de la topologie du réseau et du trajet optique dans le réseau de transport optique. Dans le cas d'un réseau optique passif PON (pour « Passive Optical Network » en anglais) et son infrastructure de liaison optique ODN (pour « Optical Distribution Network » en anglais), il est possible de déclarer dans quelle branche de l'infrastructure ODN passe un canal optique. Ce mécanisme de corrélation est très utile pour l'opérateur qui est alors en mesure d'identifier automatiquement la section dégradée le cas échéant, et de proposer des actions correctives pertinentes.

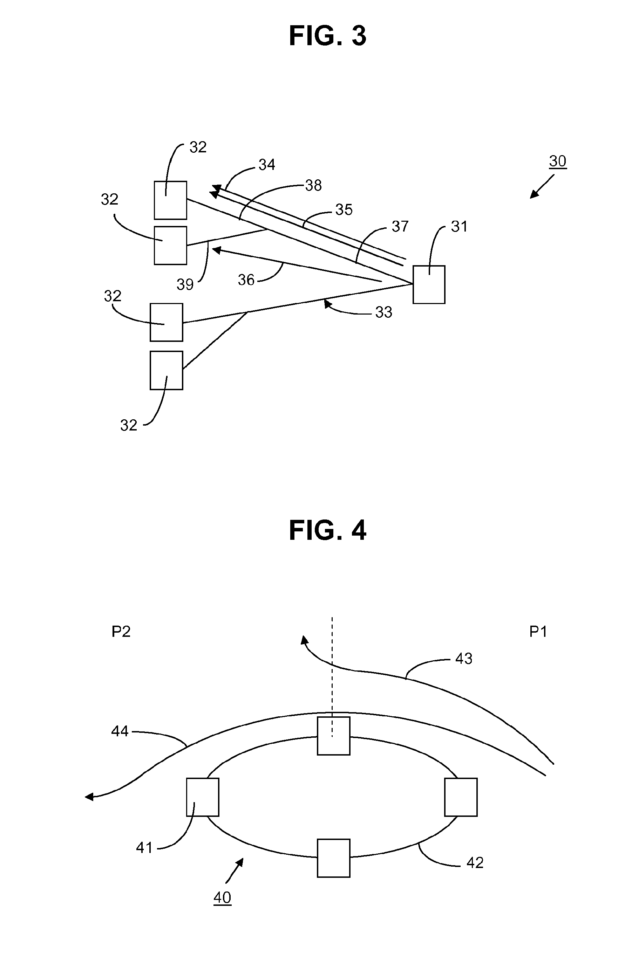

La figure 3 est une illustration d'un réseau de télécommunication à liaison optique **30** comprenant un noeud d'émission **31** et des noeuds de réception **32** reliés par des liaisons optiques **33** formant une arborescence, tel qu'un réseau optique passif de type PON (PON, GPON, XGPON, ...) et son infrastructure ODN.

Si les premier **34,** deuxième **35** et troisième **36** canaux optiques présentent une dégradation de leur bilan de puissance, la dégradation s'est donc produite dans la partie **37** du réseau de télécommunication **30** qui est commune à ces trois canaux optiques **34, 35, 36.**

Si seuls les premier **34** et deuxième **35** canaux optiques présentent une dégradation de leur bilan de puissance. Le troisième canal optique **36** n'est pas dégradé. La dégradation s'est produite dans la partie **38** du réseau de télécommunication **30** commune à ces deux canaux optiques **34** et **35,** mais où n'est pas présent le troisième canal optique **36.**

Dans le cas où seul le troisième canal optique **36** est dégradé, la dégradation est alors située dans la portion **39** du réseau où ne sont pas présents les premier **34** et deuxième **35** canaux optiques indemnes.

On considérera maintenant la figure 4 qui illustre un réseau de télécommunication **40** à liaison optique en anneau comprenant des noeuds **41** qui sont reliés par une liaison optique **42** formant une boucle.

Par exemple si une dégradation du bilan de puissance du premier canal optique **43** et du deuxième canal optique **44** est observée, la dégradation s'est produite dans la portion **P1** de la liaison optique commune aux deux canaux optiques **43** et **44.**

Si seul le deuxième canal optique **44** est dégradé, la dégradation est survenue dans la portion **P2** de la liaison optique dans laquelle seul le deuxième canal optique **44** est présent.

Enfin si on observe une dégradation du bilan de puissance du premier canal optique **43,** mais on n'observe pas de dégradation du bilan de puissance du deuxième canal optique **44,** la dégradation ne correspond pas à un dommage causé à la fibre optique **42** mais a une autre cause.

Si une dégradation du bilan de puissance d'un canal optique laisse supposer un dommage causé à la fibre optique, et si une partie de la fibre optique considérée comme potentiellement défectueuse a été identifiée, il devient nécessaire de localiser avec précision la section défectueuse pour pouvoir intervenir afin de restaurer la capacité du réseau de télécommunication.

L'identification du type de dégradation possible s'effectue au moyen d'un réflectomètre optique temporel OTDR (pour « Optical Time Domain Reflectometer » en anglais). Le réflectomètre optique temporel OTDR est raccordé à l'extrémité 0 d'une section présumée défectueuse de la liaison optique. Des impulsions optiques sont injectées à un moment t dans la fibre optique à tester. Puis elles sont partiellement rétrodiffusées (rétrodiffusion Rayleigh) ou réfléchies le long de la fibre optique et des connecteurs ou autres composants traversés. La puissance optique **P** des impulsions en retour est mesurée à un moment (t+Δt) et intégrée en fonction du temps, ce qui permet de calculer pour une fibre optique donnée à quelle distance de l'extrémité **0** se trouve le défaut. La puissance optique réfléchie **P** recueillie est représentée en fonction de la longueur **L** de fibre optique traversée.

Sur les figures 5a, 5b et 5c, sont illustrées respectivement les courbes **40, 41** et **42** sur lesquelles le pic ou la rupture de pente localise le dommage causé à la fibre optique ou l'obstacle rencontré, tel qu'un connecteur par exemple.

Le profil de la courbe **40** présente un pic à une distance **L₁** de l'extrémité **0** de la fibre optique testée, suivi d'un effondrement de la puissance optique réfléchie **P.** Cette courbe **40** est représentative d'une rupture de la fibre optique.

Le profil de la courbe **41** présente une décroissance linéaire interrompue par un pic à une distance **L₂** de l'extrémité **0** de la fibre optique testée, suivi d'une décroissance linéaire décalée vers les valeurs basse de la puissance optique réfléchie **P.** Cette courbe **41** est représentative d'un problème de connexion relatif à la fibre optique ou à l'un des connecteurs ou des autres composants traversés.

Le profil de la courbe **42** présente une décroissance linéaire interrompue par une rupture de pente verticale à une distance **L₃** de l'extrémité **0** de la fibre optique testée, suivie d'une décroissance linéaire décalée vers les valeurs basses de la puissance optique réfléchie **P.** Cette courbe **42** est représentative d'un dommage causé à la fibre optique qui ne va pas jusqu'à la rupture.

Il faut noter que l'utilisation d'un réflectomètre optique temporel OTDR nécessite de débrancher la fibre optique du réseau de télécommunication. Dans ce cas, la procédure suivante doit être suivie :
- on détecte une dégradation de la liaison optique qui se manifeste par une augmentation de l'atténuation, et on identifie une section défectueuse dans la fibre optique,
- une intervention sur le site est décidée et planifiée.

Si la fibre optique endommagée est protégée, le trafic est commuté manuellement de la fibre optique endommagée vers une fibre optique de protection redondante prévue comme solution de secours en cas de besoin. Si la fibre optique endommagée n'est pas protégée, une action corrective doit être planifiée à bref délai pendant une période de faible activité du réseau de télécommunication.

Dans les deux cas, les opérations à mener sont les suivantes :
- la ligne optique endommagée est alors débranchée ;
- le réflectomètre optique temporel OTDR est utilisé afin de déterminer où le dommage se situe ;
- le dégât est réparé, par exemple par une épissure de la fibre optique ou toute opération de maintenance appropriée ;
- la ligne optique réparée est rebranchée et peut à nouveau fonctionner normalement.

Bien entendu, la présente invention n'est pas limitée aux modes de réalisation décrits, mais elle est susceptible de nombreuses variantes accessibles à l'homme de l'art sans que l'on s'écarte de l'esprit de l'invention. En particulier, le procédé de diagnostique vient d'être décrit avec une mise en oeuvre lorsque le système de diagnostique se trouve au niveau du système de gestion du réseau de télécommunication. Toutefois un échange d'informations peut également avoir lieu entre un noeud en amont et un noeud en aval qui sont impliqués, ces noeuds pouvant être le noeud d'émission et le noeud de réception d'un même canal optique. Cette communication peut s'effectuer par exemple via un canal optique de contrôle véhiculant les informations. Les résultats des étapes du procédé de diagnostique sont ensuite centralisés par le système de diagnostique.

## Revendications

1. Procédé de diagnostique d'une dégradation des performances d'un réseau de télécommunication comportant des noeuds et des liaisons optiques, comprenant les étapes
- on détecte une diminution de la puissance d'un canal optique à l'entrée de son noeud de réception,
- on vérifie que la diminution de puissance d'entrée observée n'est pas due à une diminution de la puissance dudit canal optique en sortie de son noeud d'émission,
- on localise la section dégradée de la liaison optique en comparant le bilan de puissance dudit canal optique avec le bilan de puissance d'autres canaux optiques avec lesquels il partage certaines sections de la liaison optique, et en utilisant les données relatives à la topologie du réseau de télécommunication,
- on mesure le taux d'erreur binaire pour évaluer l'urgence de l'intervention,
- on décide des actions correctives à mener.

2. Procédé de diagnostique selon la revendication 1, dans lequel les étapes sont réalisées de manière automatisées et intégrées en s'appuyant sur le système de gestion du réseau de télécommunication.

3. Procédé de diagnostique selon l'une des revendications 1 et 2, dans lequel la dégradation de la liaison optique est localisée en identifiant les sections partagées par des canaux optiques dont le bilan de puissance est dégradé.

4. Procédé de diagnostique selon l'une des revendications 1 et 2, dans lequel la dégradation de la liaison optique est localisée en identifiant au moins une section traversées par le seul canal optique dégradé.

5. Procédé de diagnostique selon l'une des revendications 3 et 4, dans lequel on détermine la nature et la localisation de la dégradation de la liaison optique au moyen d'un réflectomètre optique temporel.

6. Procédé de diagnostique selon l'une des revendications précédentes, comportant la mesure du taux d'erreur binaire afin de déterminer l'urgence de l'intervention.

7. Procédé de diagnostique selon l'une des revendications précédente, comprenant en outre une étape de décision d'une intervention sur le site.

8. Système de diagnostique pour la mise en euvre du procédé de diagnostique selon l'une des revendications précédentes, associé au système de gestion du réseau de transport, comprenant un outil logiciel.
